(19) Europäisches Patentamt
European Patent Office
Office européen des brevets

(11) Veröffentlichungsnummer: **0 398 052 A2**

(12) **EUROPÄISCHE PATENTANMELDUNG**

(21) Anmeldenummer: **90107971.5**

(22) Anmeldetag: **26.04.90**

(51) Int. Cl.5: **C08L 81/02, C08K 5/10, C08K 5/16, //(C08L81/02, 67:00),(C08L81/02,77:00)**

(30) Priorität: **09.05.89 DE 3915067**

(43) Veröffentlichungstag der Anmeldung: **22.11.90 Patentblatt 90/47**

(84) Benannte Vertragsstaaten: **BE DE FR GB IT**

(71) Anmelder: **BAYER AG**
**D-5090 Leverkusen 1 Bayerwerk(DE)**

(72) Erfinder: **Heinz, Hans-Detlef, Dr.**
**Breslauer Strasse 31**
**D-4150 Krefeld(DE)**
Erfinder: **Pielartzik, Harald, Dr.**
**Doerperhofstrasse 39**
**D-4150 Krefeld(DE)**
Erfinder: **Reinking, Klaus, Dr.**
**Robert-Stolz-Strasse 16b**
**D-5632 Wermelskirchen(DE)**
Erfinder: **Meyer, Rolf-Volker, Dr.**
**Buchheimer Strasse 23**
**D-4150 Krefeld(DE)**
Erfinder: **Korte, Siegfried, Dr.**
**Engstenberger Höhe 3**
**D-5068 Odenthal(DE)**

(54) **Leichtfliessende Polyarylensulfid-Formmassen.**

(57) Die Erfindung betrifft neue leichtfließende Polyarylensulfid-(PAS)-Formmassen, vorzugsweise Polyphenylensulfid-(PPS)-Formmassen, die niedermolekulare, flüssigkristalline Ester(amide) enthalten.

EP 0 398 052 A2

Xerox Copy Centre

## Leichtfließende Polyarylensulfid-Formmassen

Die Erfindung betrifft neue leichtfließende Polyarylensulfid-(PAS)-Formmassen, vorzugsweise Polyphenylensulfid-(PPS)-Formmassen, die niedermolekulare, flüssigkristalline Ester(amide) enthalten.

Arylensulfidpolymere werden als inerte, hochtemperaturbeständige Thermoplaste, die zudem einen hohen Füllgrad mit Glasfasern und/oder anderen Materialien erlauben, zunehmend für die Elektroindustrie und andere Industriebereiche interessant.

Der Einsatz dieser Polymeren, insbesondere des Polyparaphenylensulfids (PPS), nimmt vor allem in Bereichen, die bislang Duroplasten vorbehalten waren, wegen der einfacheren Verarbeitbarkeit zu.

Spritzgußfähige Polyarylensulfid-Formmassen, die gegebenenfalls Glasfasern und/oder mineralische Füllstoffe in hohen Konzentrationen enthalten, zeichnen sich im allgemeinen durch niedrige Viskositäten der Schmelzen aus.

Infolgedessen macht ihre Verarbeitung durch Spritzgießen normalerweise keine Schwierigkeiten.

Bei der Herstellung dünnwandiger Formteile können jedoch Schwierigkeiten auftreten, wenn die Fließwege der Schmelzen im Werkzeug sehr lang sind. Dies kann insbesondere dann der Fall sein, wenn aus Gründen der Verzugsfreiheit die Anschnitte so gelegt sind, daß eine Vorzugsorientierung der Glasfasern resultiert. Bei der Herstellung derartiger Formteile kann es schwierig sein, die Formen trotz der niedrigen Viskositäten der Schmelzen vollständig zu füllen. Der Grund dafür kann sein, daß PPS-Schmelzen beim Abkühlen außerordentlich rasch erstarren.

Hinweise dafür gibt die hohe Kristallisationstemperatur von z.B. PPS, d.h. die Temperatur, bei der beim Abkühlen der Polymerschmelzen die Kristallisation einsetzt. Diese Kristallisationstemperatur liegt, wie aus DSC-Messungen folgt, bei etwa 230 bis 250°.

Daher können bei langen Fließwegen der Schmelzen diese bereits während des Formfüllvorgangs soweit abgekühlt werden, daß dann schon die Erstarrung unter Zunahme der Viskosität der Schmelzen einsetzen kann. Die Folge kann sein, daß die vollständige Füllung der Form erschwert wird. Allgemein weisen Formteile, bei deren Herstellung der Erstarrungsprozeß der Schmelze einsetzt, bevor die Form vollständig gefüllt ist, verringerte mechanische Festigkeit und, bei verstärkten oder gefüllten Formmassen, Oberflächenstörungen in Angußferne auf.

Daher sollten zur vollständigen Füllung die Formwerkzeuge rasch gefüllt werden. In vielen Fällen ist dies nur bei hinreichend niedrigen Schmelzviskositäten möglich.

Im Sinne der Verarbeitbarkeit von gegebenenfalls faserverstärkten oder mineralgefüllten Polyarylensulfidformmassen wäre es daher von Vorteil, die Schmelzviskosität deutlich zu senken. Vorteilhafterweise sollte der hohe Kristallisationsgrad der Polymeren dadurch nicht beeinflußt werden.

Die Möglichkeit, die Schmelzviskosität der Arylensulfidpolymeren durch Absenkung der Molekulargewichte zu erniedrigen, ist dadurch begrenzt, daß die mechanischen Festigkeiten von Polyarylensulfid-Formmassen bei zu niedrigen Molekulargewichten der Polyarylensulfide drastisch verringert sind.

Überraschenderweise wurde nun gefunden, daß durch Zusatz ausgewählter, niedermolekularer, flüssigkristalliner Ester und/oder Esteramide die Schmelzviskosität von Polyarylensulfiden deutlich gesenkt werden kann, ohne daß der Kristallinitätsgrad des Polymeren negativ beeinflußt wird und ohne daß das Molekulargewicht des Polyarylensulfids verringert wird.

Gegenstand der Erfindung sind daher neue, leichtfließende Polyarylensulfid-Formmassen, dadurch gekennzeichnet, daß sie bestehen aus

A) 70-99,9 Gew.-% Polyarylensulfiden, bevorzugt Polyparaphenylensulfid,

B) 0,1-30 Gew.-% eines oder mehrerer niedermolekularer, flüssigkristalliner Ester und/oder Esteramide des allgemeinen Strukturtyps (I),

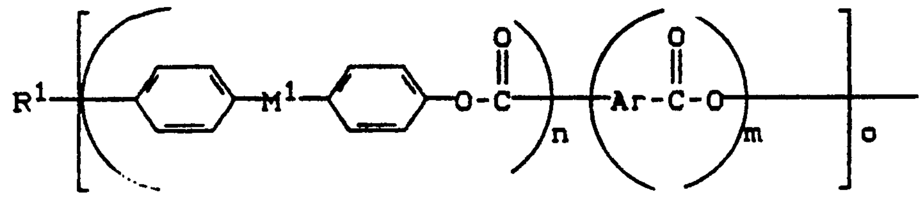

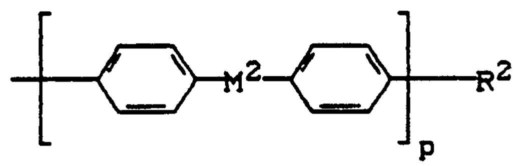

(Formel I)

worin

-Ar ein aromatischer Rest mit 6 - 20 C-Atomen ist, der einkernig oder mehrkernig sein kann, wobei der mehrkernige Rest über eine Bindung verknüpft oder annelliert sein kann,

worin

$R^1$ und $R^2$ unabhängig voneinander H, Chlor, $-O-C_1-C_4$-Alkyl, $-O-C_3-C_6$-Cycloalkyl, $-O-C_6-C_{14}$-Aryl, $C_1-C_4$-Alkyl, $C_3-C_6$-Cycloalkyl, $C_6-C_{14}$-Aryl, fluoriertes $C_1-C_4$-Alkyl, fluoriertes $C_3-C_6$-Cycloalkyl, fluoriertes $C_6-C_{14}$-Aryl, wobei in dem fluorierten Alkyl, Cycloalkyl bzw. Aryl mindestens ein und maximal alle Wasserstoffatome gegen Fluoratome ausgetauscht sind, oder ein Rest der Formeln (1)/a) bis l) sind,

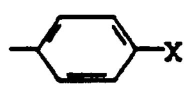 , 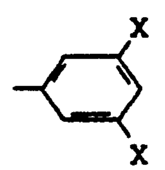 , 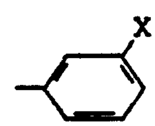 , 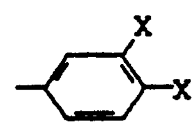 ,

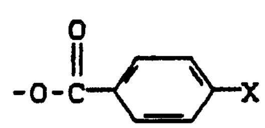 , 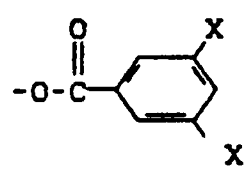 , 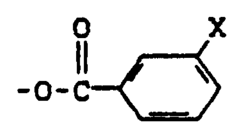 ,

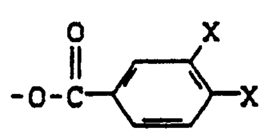 , 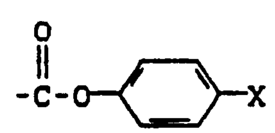 ,

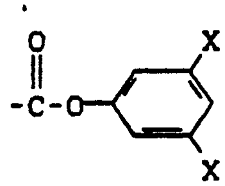 , 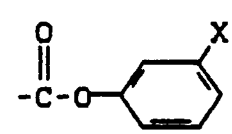 , 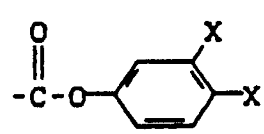

(Reste - (1.a) - (1.l), entsprechend ihrer Aufeinanderfolge),

wobei

X wiederum die vorstehend für $R^1$ bzw. $R^2$ genannten Reste von H bis fluoriertes $C_6-C_{14}$-Aryl ist,

worin $-M^1$ und $-M^2$ gleich oder verschieden sind und zweibindige Reste der Formeln l.1) bis l.11)

$-\underset{\underset{O}{\|}}{C}-O-$,

$-\underset{\underset{O}{\|}}{C}-NH-$,

$-N=N-$, $-N=\underset{\underset{O}{\downarrow}}{N}-$,

$-CH=N-$, $-CH=CH-$, $-C\equiv C-$, $-O-\underset{\underset{O}{\|}}{C}-$,

$-HN-\underset{\underset{O}{\|}}{C}-$,

$-\underset{\underset{O}{\downarrow}}{N}=N-$

und $-N=CH-$

(Formeln (I.1) - (I.11), entsprechend ihrer Aufeinanderfolge)

sein können,

und worin

m Null, 1 oder 2,

n 1 oder 2,

o 1, 2, 3 oder 4 und

p Null oder 1 sind, wobei im Falle von p = Null

$R^2$ nur (1a), (1b), (1c) oder (1d) sein kann,

und/oder

flüssigkristalliner Ester- und/oder Esteramid-Oligomerer des Strukturtyps der Formel (II) mit statistischer Verteilung der Struktureinheiten,

$$\left[R^3-\overset{\overset{O}{\|}}{C}-\right]\left[-O-Ar^a-\overset{\overset{O}{\|}}{C}-\right]_b\left[-O-Ar^b-O-\right]_c\left[-\overset{\overset{O}{\|}}{C}-R^4-\overset{\overset{O}{\|}}{C}-\right]_d\left[-NH-R^5-Y'-\right]_e\left[-\overset{\overset{O}{\|}}{C}-R^3\right]$$

(II)

worin

$R^3$ einen $C_1$-$C_{20}$-Alkylrest, vorzugsweise Methylrest, oder einen gegebenenfalls substituierten, vorzugsweise mono- oder disubstituierten $C_6$-$C_{20}$-Arylrest, vorzugsweise einen Phenylrest, darstellt,

($R^3-\underset{\underset{O}{\|}}{C}$ ist jeweils eine Endgruppe)

$Ar^a$ ein bivalenter, gegebenenfalls substituierter (Substituenten wie in $R^3$), ein- oder mehrkerniger aromatischer Rest mit 6 - 24 C-Atomen ist, wobei der mehrkernige Rest direkt verknüpft oder auch anelliert sein kann,

$Ar^b$ ein bivalenter, gegebenenfalls substituierter, ein- oder mehrkerniger aromatischer Rest mit 6 - 30 C-Atomen, wobei der mehrkernige Rest unterschiedlich verknüpft sein kann, ist,

$R^4$ bzw. $R^5$ für $C_mH_{2m}$ mit m = 0 bis 40 bzw. 3 - 40 stehen oder die Bedeutung eines gegebenenfalls substituierten bivalenten, ein- oder mehrkernigen aromatischen Restes mit 6-24 C-Atomen haben, wobei der mehrkernige Rest unterschiedlich über eine Bindung oder auch anelliert verknüpft sein kann,

$Y'$ für -O-,

$-\overset{\overset{O}{\|}}{C}-$ oder -NH- steht, und im Falle der Verknüpfung mit einer Endgruppe

$-\overset{\overset{O}{\|}}{C}-R^3$ für die Reste -O- oder -NH- steht, und

b = Null bis 10, vorzugsweise bis 8, insbesondere bis 4,

c = 1 bis 9, vorzugsweise bis 7, insbesondere 1 bis 4,

d = Null bis 9, vorzugsweise bis 7, insbesondere bis 3, und

e = Null bis 3, vorzugsweise bis 2, ist

und worin die Endgruppen durch Strukturelemente des Typs

$R^3-\overset{\overset{O}{\|}}{C}-$ gebildet werden,

und

C) gegebenenfalls 0,001 bis ungefähr 300 Gew.-%, bezogen auf die Summe der Gewichte der Komponenten A) und B), weiterer Zusatzstoffe.

Gegenstand der Erfindung ist auch ein Verfahren zur Herstellung der erfindungsgemäßen Arylensulfidpolymer-Formmassen.

Gegenstand der Erfindung ist auch die Verwendung der erfindungsgemäßen Formmassen zur Herstellung von Formkörpern, z.B. nach den Verfahren des Spritzgießens und der Extrusion, von Folien, z.B. durch Extrusion, von Fasern, Filamenten, Monofilen, Geweben, z.B. durch Schmelzspinnen und gegebenenfalls weitere Verarbeitung, sowie von anderen Gegenständen, z.B. Verbundwerkstoffen (Composites).

Auch die aus den erfindungsgemäßen Formmassen hergestellten Formkörper, Folien, Fasern, Verbundwerkstoffe usw. sind Gegenstand der Erfindung.

<u>Verbindungen der Formel (I):</u>

Besonders bevorzugte Reste -Ar- der Formel (I) und der Reste $Ar^a$ und $Ar^b$ in Formel (II) sind die Reste (Ar1) bis (Ar4)

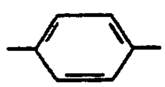 , 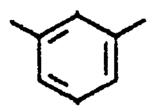 , 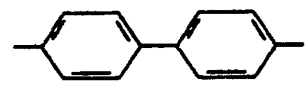 ,

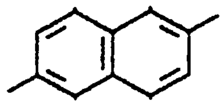

(Ar1)-(Ar4), entsprechend ihrer Reihenfolge.

Bevorzugte Reste $R^1$ und $R^2$ sind H, $CH_3$, $OCH_3$, Cyclohexyl, Phenyl, $CF_3$, $OCF_3$, fluoriertes Cyclohexyl und fluoriertes Phenyl (wobei jeweils mindestens 1 und maximal alle H-Atome gegen Fluor im Vergleich zur nichtfluorierten Gruppe ausgetauscht sind).

Bevorzugte Reste -M- sind solche der Formeln (I.1), (I.2), (I.5), (I.8), (I.9) und (I.11).

Bevorzugte Indexkombinationen m, n, o, p und q sind

m = Null, n = 1, o = 1, p = Null;
m = Null, n = 1, o = 1, p = 1;
m = Null, n = 2, o = 1, p = 1;
m = n = o = p = 1;
m = 1, n = 1, o = 2, p = 1;
m = Null, n = 2, o = 1, p = Null;
m = 1, n = 2, o = 1, p = 1 und
m = 1, n = 1, o = 3, p = 1.

Die Verbindungen der Formel (I) zeichnen sich dadurch aus, daß sie beim Schmelzen eine flüssigkristalline Phase durchlaufen (bezüglich flüssigkristalliner Verbindungen bzw. Phasen siehe beispielweise: D. Demus, L. Richter, Textures of Liquid Crystals, Verlag Chemie, Weinheim - New York 1978 oder H. Kelker, R. Hatz, Handbook of Liquid Crystals, Verlag Chemie, Weinheim, Deerfield 1980).

Bevorzugte Verbindungen der Formel (I) sind solche, die 3 bis 25 aromatische Teilstrukturen enthalten, wobei der Rest -Ar- als eine Teilstruktur gewählt ist, unabhängig davon, ob er einkernig oder mehrkernig ist. Besonders bevorzugte Verbindungen der Formel (I) sind solche, die 4 bis 15 aromatische Teilstrukturen enthalten, wobei wiederum der Rest -Ar- als eine aromatische Teilstruktur gewählt ist, unabhängig davon, ob er einkernig oder mehrkernig ist. Ganz besonders bevorzugte Verbindungen der Formel (I) sind solche, die 4 bis 10 aromatische Teilstrukturen im vorstehend definierten Sinne haben.

Als Verbindungen der Formel (I) seien beispielsweise die folgenden vier Gruppen von Verbindungen (I,A) bis (I,D) genannt:

<u>(I,A)</u> Flüssigkristalline Verbindungen der Formel (I) mit <u>drei</u> aromatischen Teilstrukturen, worin

m = Null, n = 1, o = 1 und p = Null sind,

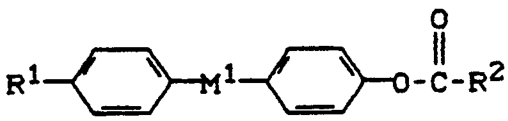

(Formel IA)

| Nr. | $R^1$ | $M^1$ | $R^2$ |
|---|---|---|---|
| 1 | $CH_3$ | 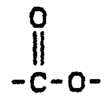 | 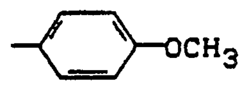 |
| 2 | $CH_3O-$ | 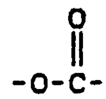 | 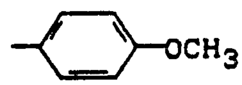 |
| 3 | $CH_3O-$ | 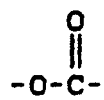 | 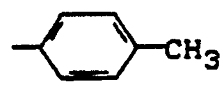 |
| 4 | $CH_3$ | 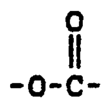 | 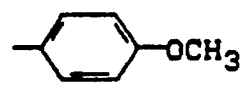 |

(I,B) Flüssigkristalline Verbindungen der Formel (I) mit vier aromatischen Teilstrukturen, worin wieder m = Null, n = 1, o = 1 und p = Null sind:

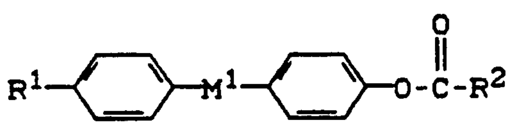

(Formel IB)

| Nr. | $R^1$ | $M^1$ | $R^2$ |
|---|---|---|---|
| | 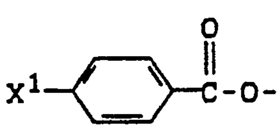 | 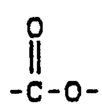 | 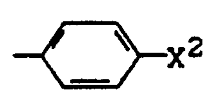 |
| 5 | $X^1$=H | | $X^2$=H |
| 6 | $CH_3$ | | $CH_3$ |
| 7 | $OCH_3$ | | $OCH_3$ |
| 8 | $CF_3$ | | $CF_3$ |
| 9 | Cl | | Cl |

(I,C) Flüssigkristalline Verbindungen der Formel (I) mit fünf aromatischen Teilstrukturen, worin m = n

= o = p = 1 sind.

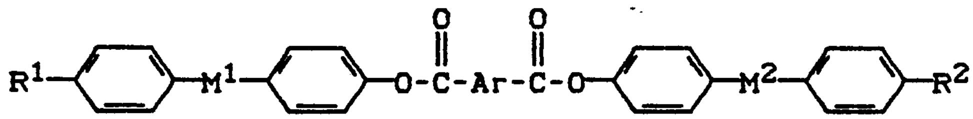

(Formel IC)

| Nr. | $R^1$ | $M^1$ | $M^2$ | $R^2$ | Ar |
|---|---|---|---|---|---|
| 10 | H | $-O-\overset{\overset{O}{\|}}{C}-$ | $-\overset{\overset{O}{\|}}{C}-O-$ | H | 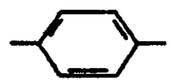 |
| 11 | $CH_3$ | " | " | $CH_3$ | " |
| 12 | $OCH_3$ | " | " | $OCH_3$ | " |
| 13 | H | $-\overset{\overset{O}{\|}}{C}-O-$ | $-O-\overset{\overset{O}{\|}}{C}-$ | H | " |
| 14 | $CH_3$ | " | " | $CH_3$ | " |
| 15 | $OCH_3$ | " | " | $OCH_3$ | " |

(I,D) Flüssigkristalline Verbindungen der Formel (I) mit sieben aromatischen Teilstrukturen, worin wieder
m = n = o = p = 1 sind:

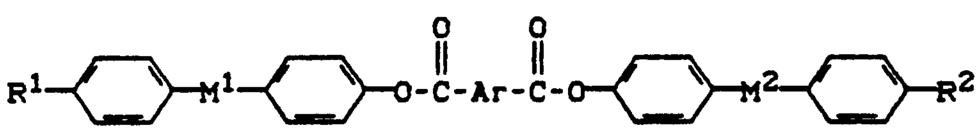

(Formel I D)

| Nr. | $R^1$ | $M^1$ | Ar | $M^2$ | $R^2$ |
|---|---|---|---|---|---|
| 16 | 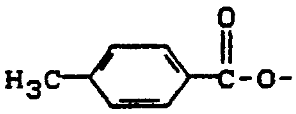 | 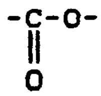 | 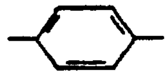 | 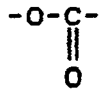 | 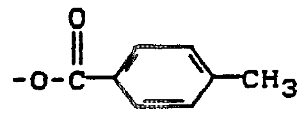 |
| 17 | 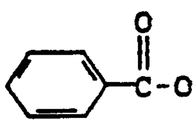 | 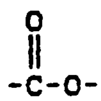 | 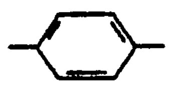 | 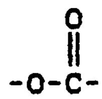 | 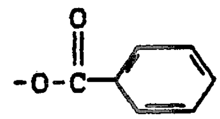 |
| 18 | 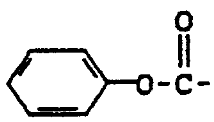 | 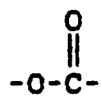 | 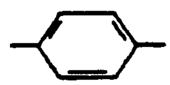 | 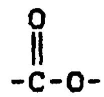 | 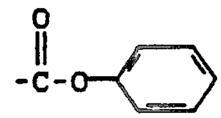 |
| 19 | 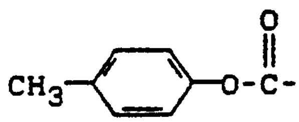 | 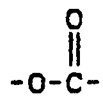 | 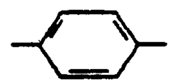 | 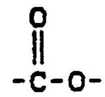 | 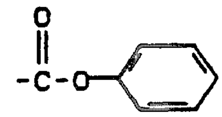 |

Die Verbindungen der Formel (I) werden den Arylensulfidpolymeren zu 0,1 bis 30, bevorzugt 1-20 und besonders bevorzugt 2-15 Gew.-% zugesetzt.

Verbindungen der Formel (II):

Bevorzugte Reste $R^3$ der Formel (II) sind Alkylreste mit 1 bis 30, besonders bevorzugt 1 bis 22 Kohlenstoffatomen, wie $CH_3$, $C_2H_5$, $C_3H_7$, $C_4H_9$, $C_5H_{11}$, $C_6H_{13}$, $C_{15}H_{31}$, $C_{16}H_{33}$, $C_{17}H_{35}$, $C_{18}H_{37}$, $C_{19}H_{39}$ und $C_{22}H_{45}$, ganz besonders bevorzugt $CH_3$, oder aromatische Reste der Formeln (III), (IIIa) und (IV)

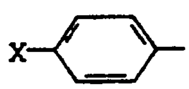 (III), 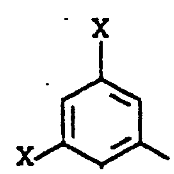 (IIIa)

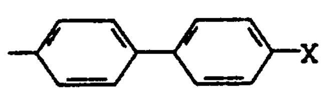 (IV),

worin

X Wasserstoff, Halogen, $NO_2$, $C_1$-$C_4$-Alkyl, $C_3$-$C_6$-Cycloalkyl, $C_6$-$C_{14}$-Aryl, O-$C_1$-$C_4$-Alkyl, O-$C_3$-$C_6$-Cycloalkyl, fluoriertes $C_1$-$C_4$-Alkyl, fluoriertes $C_3$-$C_6$-Cycloalkyl oder fluoriertes $C_6$-$C_{14}$-Aryl sein kann (wobei der Ausdruck "fluoriert" wie bereits früher beschrieben definiert wird).

Insbesonders sind als $R^3$ bevorzugt aromatische Reste der Formeln (V) und (VI)

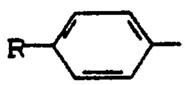 (V), 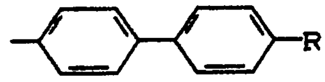 (VI),

worin

R für Wasserstoff, Halogen wie Fluor, Chlor, $C_1$-$C_4$-Alkyl, $C_3$-$C_6$-Cycloalkyl, O-$C_1$-$C_4$-Alkyl, O-$C_3$-$C_6$-Cycloalkyl, fluoriertes $C_1$-$C_4$-Alkyl oder fluoriertes $C_3$-$C_6$-Cycloalkyl (wobei der Ausdruck "fluoriert" wie oben beschrieben definiert wird) steht.

Ganz besonders bevorzugt sind solche aromatischen Reste der Formeln (V) und (VI), in denen R = Wasserstoff bedeutet.

Bevorzugte Monocarbonsäuren, von denen sich der Rest $R_3$-$\underset{O}{\underset{\|}{C}}$- ableitet, sind u.a. Benzoesäure, 4-Methylbenzoesäure, 4-Methoxybenzoesäure und 4-Biphenylcarbonsäure. Besonders bevorzugt sind u.a. Benzoesäure, 4-Methylbenzoesäure und 4-Biphenylcarbonsäure.

Als bivalente aromatische Reste ($Ar^a$) in der Formel (II) kommen solche in Betracht, die den aromatischen Hydroxycarbonsäuren der Formeln

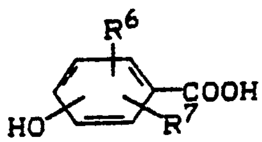 und 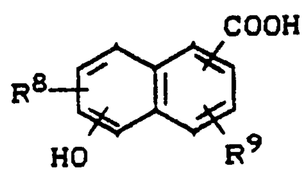

(VII) (VIII)

zugrundeliegen, worin

$R^6$ bis $R^9$ $C_1$-$C_4$-Alkyl (vorzugsweise Methyl, Ethyl), $C_1$-$C_4$-Alkoxy (vorzugsweise Methoxy, Ethoxy), $C_6$-$C_{10}$-Aryl oder -Aryloxy (vorzugsweise Phenyl, Phenyloxy, Naphthyl, Naphthyloxy, Biphenyl, Biphenyloxy, Tolyl, Tolyloxy), $C_7$-$C_{12}$-Alkylaryl (vorzugsweise Benzyl), Halogen (vorzugsweise Chlor und Brom) oder Wasserstoff bedeuten, und die Valenzen zwischen Kern und Hydroxylgruppe, sowie zwischen Kern und Carboxylgruppe einen Winkel von 45 bis 180° bilden.

Bevorzugte aromatische Hydroxycarbonsäuren sind 4-Hydroxy-3-methylbenzoesäure, 4-Hydroxy-3-methoxybenzoesäure, 4-Hydroxybenzoesäure, 3-Hydroxybenzoesäure, 6-Hydroxy-2-naphthoesäure. Besonders bevorzugt sind 4-Hydroxybenzoesäure, 3-Hydroxybenzoesäure und 6-Hydroxy-2-naphthoesäure.

Die aromatischen Hydroxycarbonsäuren haben die OH-Gruppe vorzugsweise symmetrisch (1,4-Phenylen- oder 2,6-Naphthylen- oder 4,4′-Diphenyl-Positionen) zur Carboxylgruppe.

Als bivalente aromatische Reste ($Ar^b$) der Formel (II) kommen solche in Betracht, die den Diphenolen der Formel (IX)

HO-Z-OH (IX) zugrundeliegen,

worin

Z einen zweiwertigen, ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind und die beiden Valenzen einen Winkel von 45 bis 180° bilden.

Die aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben m/p-Phenylen-, 2,6- oder 1,5-Naphthylen- und 4,4′-Biphenylen-Resten auch durch Sauerstoff, Schwefel, Carbonyl, Sulfonyl, oder Azomethin, $C_1$-$C_{18}$-, vorzugsweise $C_1$-C-Alkylen oder -Alkyliden, (alkylsbustituiertes) Cyclohexylen oder -hexyliden oder -$O(CH_2)_nO$- mit n = 2 bis 4 verbundene Phenylenreste.

Bevorzugte Diphenole sind z.B. Hydrochinon, 4,4′-Dihydroxydiphenyl, 4,4′-Dihydroxydiphenylether, 4,4′-Dihydroxydiphenylethan, 4,4′-Dihydroxydiphenoxyethan, 3,5′-Dihydroxydiphenyl, 3,5′-Dihydroxydiphenylether, 1,5-Dihydroxynaphthalin, 2,6-Dihydroxynaphthalin, 1,4-Dihydroxynaphthalin, Methylhydrochinon, Phenylhydrochinon, Ethylhydrochinon, 2,2′-Dimethyl-4,4′-dihydroxydiphenyl, 3,3′,5,5′-Tetramethyl-4,4′-dihydroxydiphenyl, 1,2-(2-Chlor-4-hydroxyphenoxy)-ethan, 4-Methoxy-2,6-dihydroxynaphthalin, Resorcin, 3,4′-Dihydroxydiphenyl, 1,6-Dihydroxynaphthalin, 1,7-Dihydroxynaphthalin, 2,7-Dihydroxynaphthalin, 4-Chlorresorcin, 4-Phenylresorcin, 4-Ethoxyresorcin, 2,5-Dichlor-1,6-dihydroxynaphthalin und 4-Methoxy-2,7-dihydroxynaphthalin.

Besonders bevorzugte Diphenole sind Hydrochinon und 4,4′-Dihydroxydiphenyl.

Als bivalente Reste ($R^4$) der Formel (II) kommen solche in Betracht, die den Dicarbonsäuren der Formel (X)

HOOC-$R^4$-COOH (X) zugrundeliegen,

worin

$R^4$ für $C_mH_{2m}$ mit m = 0 bis 40, bevorzugt von 0 bis 20 und von 30-38, steht, oder bevorzugt einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben 1,4-Phenylen-Resten, 1,5- oder 2,6-Naphthylen-Resten und 4,4′- oder 3,5′-Biphenylen-Resten auch durch Sauerstoff, Schwefel, Carbonyl, Sulfonyl, $C_1$-$C_4$-Alkylen oder -Alkyliden, Cyclohexylen oder -hexyliden oder -$O(CH_2)_nO$- mit n = 1 bis 4 verbundene Phenylenreste, vorzugsweise in symmetrischer Substitution ("para-Stellung").

Bevorzugt sind folgende aliphatische Dicarbonsäuren: Oxalsäure, Bernsteinsäure, Adipinsäure, Korksäure, Azelainsäure, Trimethyladipinsäure, Sebacinsäure, Dodecandisäure und Dimerfettsäuren.

Besonders bevorzugt werden Oxalsäure, Adipinsäure, Sebazinsäure und Dimerfettsäuren eingesetzt.

Bevorzugte aromatische Dicarbonsäuren sind solche, die folgenden bivalenten Resten zugrundeliegen: 1,4-Phenylen-, 1,4-Naphthylen- oder 4,4′-Biphenylen-, worin die beiden Bindungen sich koaxial in entgegengesetzte Richtungen erstrecken, oder 1,5-Naphthylen-Reste, 2,6-Naphthylen-Reste oder 3,5′-Biphenylen-Reste, worin die beiden in entgegengesetzte Richtungen zeigenden Bindungen parallel zueinander verschoben sind, sowie 1,3-Phenylen-Reste, 1,3-, 1,6-, 1,7- oder 2,7-Naphthylen-Reste oder 3,4′-Biphenylen-Reste, worin die beiden Bindungen nicht an benachbarten Atomen lokalisiert sind und sich nicht koaxial oder parallel verschoben in entgegengesetzte Richtungen erstrecken.

Bevorzugte aromatische Dicarbonsäuren sind 1,4-Naphthalindicarbonsäure, 1,5-Naphthalindicarbonsäure, 2,6-Naphthalindicarbonsäure, Biphenyl-4,4′-dicarbonsäure, Bipenyl-3,3′-dicarbonsäure, Diphenoxyethan-4,4′-dicarbonsäure, Diphenylether-4,4′-dicarbonsäure, Methylterephthalsäure, Methoxyterephthalsäure, Chlorterephthalsäure, 4-Chlornaphthalin-2,7-dicarbonsäure, 2,6- oder 2,7-Naphthalindicarbonsäure, Biphenyl-3,4′-dicarbonsäure, 4-Methylisophthalsäure, 5-Methylisophthalsäure, Diphenylether-4,4′-dichlor-3,3′-dicarbonsäure, Iso- und Terephthalsäure.

Besonders bevorzugt sind Iso- und Terephthalsäure.

Es können sowohl ausschließlich aliphatische oder aromatische Dicarbonsäuren als auch Mischungen von beiden eingesetzt werden. Bevorzugt werden zumindest teilweise aromatische und besonders bevorzugt nur aromatische Dicarbonsäuren eingesetzt.

Als bivalente Reste ($R^5$) der Formel (II) kommen solche in Betracht, die den Aminoverbindungen der Formel (XI)

$H_2N$-$R^5$-Y (XI) zugrundeliegen,

worin

$R^5$ für $C_mH_{2m}$ mit m = 3 bis 40, bevorzugt 6 bis 12, und einen cycloaliphatischen Rest mit $C_mH_{2m}$-2, mit 5 bis 20, bevorzugt 5-15 C-Atomen (5-6 Ring-C-Atomen), und

Y für OH, COOH oder $NH_2$ stehen, oder worin $R^5$

einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen-, Naphthylen- und Biphenylen-Resten auch durch Sauerstoff, Schwefel, Carbonyl, Sulfonyl, $C_1$-$C_4$-Alkylen oder -Alkyliden, Cyclohexylen oder -hexyliden oder -$O(CH_2)_nO$-mit n = 1 bis 4 verbundene Phenylenreste.

Anstelle der aliphatischen Aminocarbonsäuren können auch die entsprechenden Lactame, z.B. Caprolactam ansttt $\epsilon$-Aminocapronsäure, eingesetzt werden.

Bevorzugte (cyclo)aliphatische Aminocarbonsäuren sind $\epsilon$-Aminocapronsäure bzw. Caprolactam, $\omega$-Aminoundecan säure, $\omega$-Aminododecansäure bzw. Laurinlactam und 4-Aminocyclohexyl-carbonsäure; bevorzugte aromatische Aminocarbonsäuren sind 4-Aminobenzoesäure und 6-Amino-2-naphthoesäure. Besonders bevorzugt sind $\epsilon$-Aminocapronsäure bzw. Caprolactam, 4-Aminobenzoesäure und 6-Amino-2-naphthoesäure.

Bevorzugte Aminophenole sind z.B.:

3-Aminophenol, 4-Aminophenol, 3-Amino-2-methylphenol, 3-Amino-4-methylphenol, 5-Amino-1-naphthol, 6-Amino-1-naphthol, 5-Amino-2-naphthol, 7-Amino-2-naphthol, 8-Amino-2-naphthol, 6-Amino-2-naphthol und 4′-Amino-1-hydroxybiphenyl, besonders bevorzugt sind 4-Aminophenol und 3-Aminophenol, sowie 4′-Amino-1-hydroxy-biphenyl.

Bevorzugte Oligomere der Formel (II) sind solche, die durchschnittlich 3 bis 25, besonders bevorzugt 4 bis 20, aromatische Teilstrukturen enthalten, wobei eine aromatische Teilstruktur wie unter Formel (I) definiert ist.

Die Herstellung der obengenannten Ester der Formel (I) kann z.B. gemäß der Lehre der unveröffentlichten Deutschen Patentanmeldung P 3 824 365.2 erfolgen, nämlich durch Umsetzung entsprechender phenolischer Verbindungen oder deren Alkalisalze mit entsprechenden reaktiven Derivaten aromatischer Carbonsäuren nach bekannten Veresterungsverfahren.

Die Herstellung der obengenannten Verbindungen der Formel (II) erfolgt nach bekannten Schmelz- und Umeste rungsverfahren, die auch zur Herstellung von thermotropen LC-Polymeren herangezogen werden (Direktveresterungsverfahren [EP-A 00 88 546], Acetatverfahren [EP-A 01 02 719, 134 204], Schmelzumesterung von Carbonsäurephenylestern mit Diphenolen (Diphenylesterverfahren) [EP-A 072 540, 070 539, 024 499, 45 499, DE-OS 20 25 971, EP 070 539 und EP 132 637]).

Die Verbindungen der Formel (II) sind in der eigenen, bislang unveröffentlichten Deutschen Patentanmeldung P 3 831 121.6 beschrieben.

Die Verbindungen der Formel (II) werden besonders bevorzugt nach dem Acetat- und/oder nach dem Diphenylesterverfahren hergestellt. Es sind oligomere Gemische mit mittleren Molekulargewichten (Zahlenmittel) bis 4000 g $mol^{-1}$, vorzugsweise bis 2500 g $mol^{-1}$, welche sowohl ihre genannten Struktureinheiten wie auch ihr Molekulargewicht in statistischer Verteilung besitzen können und flüssigkristalline Eigenschaften aufweisen. Sie werden in den für (I) angegebenen Mengen den Polyarylensulfiden als Additive zugesetzt, wobei die flüssigkristallinen, von aliphatischen Bausteinen freien, oligomeren Verbindungen der Formel (II) bevorzugt sind.

Die flüssigkristallinen Additive (I) und/oder (II) können einzeln oder in einem beliebigen Gemisch eingesetzt werden. Bevorzugt werden 1-20 Gew.-% und besonders bevorzugt 2-15 Gew.-% eingesetzt.

Die Herstellung der erfindungsgemäßen Polyarylensulfid-Formmassen erfolgt bevorzugt in der Schmelze; alle in der Thermoplast-Verarbeitung zur Abmischung üblichen Verfahren, wie z.B. Kneten oder Extrudieren, sind zur Herstellung der erfindungsgemäßen Arylensulfidpolymeren geeignet.

Die erfindungsgemäßen Polyarylensulfid-Formmassen können weitere Zusatzstoffe gemäß C) enthalten, z.B. Verstärkungsmaterialien (z.B. Glasfasern oder mineralische Füllstoffe), UV-Stabilisatoren, Antioxidantien, Weichmacher, weitere Fließhilfsmittel, Nukleierungsmittel, polymere Legierungspartner (z.B. Schlagzähmodifikatoren), Flammschutzmittel und andere Zusätze in der Menge von 0,001 bis ungefähr 300 Gew.%, bezogen auf die Summe der Gewichte von Arylensulfidpolymeren und erfindungsgemäß einzusetzenden Additiven B).

Die modifizierten Polyarylensulfid-Formmassen zeichnen sich durch eine verringerte Schmelzviskosität bei hohem Kristallisationsgrad aus. Sie können nach bekannten Verfahren z.B. zu Formkörpern, Folien und anderen Gegenständen verarbeitet werden.

Weiterhin können die erfindungsgemäß modifizierten Arylensulfidpolymeren vorteilhaft z.B. zur Herstellung von Fasern, Monofilen und Filamenten eingesetzt werden. Die Ausrüstung von Arylensulfidpolymeren mit den erfindungsgemäß einzusetzenden flüssigkristallinen Additiven ist insbesondere auch für die Schmelzspinnverarbeitung von Vorteil. Hierfür kann gesondert compoundiertes Material eingesetzt werden; es ist aber auch möglich, die Addi tive erst während des Verspinnens an beliebiger Stelle vor den Düsen dem Arylensulfidpolymeren zuzusetzen, z.B. dem Granulat vor dem Aufschmelzen oder der Schmelze. Häufig ist es erwünscht, bei vorgegebener Temperatur den Druckaufbau in der Spinnapparatur - hier besonders im Düsenbereich - zu reduzieren, um die Verarbeitungssicherheit zu erhöhen. Dies ist bei Verwendung der erfindungsgemäß modifizierten Arylensulfidpolymeren möglich.

Anderenfalls kann bei Verwendung der erfindungsgemäßen Arylensulfidpolymeren bei unveränderter Schmelzviskosität und somit konstantem Druckaufbau die oft schon in einem kritischen Bereich justierte Spinntemperatur abgesenkt werden. Qualitätsmindernde und für das Verarbeitungsverhalten abträgliche Abbau- und Nebenreaktionen können so zurückgedrängt werden. Durch Absenkung der Temperatur kann man auch z.B. bei der PPS-Verspinnung die Abscheidung niedermolekularer Komponenten im äußeren Düsenbereich (z.B. an den Düsenöffnungen) vermindern. Als Folge beobachtet man im Spinngut eine geringere Zahl von Filamentverklebungen und eine niedrigere Quote an Dick/Dünnstellen in Monofilen und Fasern.

Gleichfalls ist bei Verwendung der erfindungsgemäßen Arylensulfidpolymeren die Verarbeitungssicherheit in den nachgeschalteten Verfahrensstufen, z.B. Strecken, Kräuseln, Fixieren, erhöht. Dies drückt sich insbesondere durch eine geringere Flusenbildungsrate beim Strecken der Fäden aus. Dies hat aber auch zur Folge, daß die Nachbehandlungsgeschwindigkeit insgesamt gesteigert werden kann.

Die ersponnenen Fasern aus den erfindungsgemäßen Polyarylensulfidformmassen sind auch durch eine gleichmäßigere und geschlossene Oberflächenstruktur gekennzeichnet. Dies ist vor allem für Monofile und

Filamentendlosgarne von Vorteil.

Die Schmelzviskositätsmessungen wurden, sofern nicht anders angegeben, mit einem Contravis RM 300 Platte-Kegel-Viskosimeter, die DSC-Messungen mit einem Perkin-Elmer-DSC-System 7-Gerät durchgeführt.

Als relatives Maß für den Kristallisationsgrad wurde die durch DSC-Messungen ermittelte Kristallisationsenthalpie beim Abkühlen ($\Delta H_K$) gewählt.

Beispiele

Beispiel 1 (nicht erfindungsgemäß)

Herstellungsbeispiel eines erfindungsgemäß einzusetzenden, niedermolekularen, flüssigkristallinen Esters der Formel (I) gemäß P 3 824 365.2

1. Stufe: 4-Hydroxyphenyl-4-hydroxybenzoat

138,1 g p-Hydroxybenzoesäure und 110,1 g Hydrochinon werden zusammen mit 2 g Borsäure und 2,5 g Schwefelsäure in 900 ml Xylol suspendiert und bis zum Ende der Wasserabspaltung unter Rückfluß erhitzt. Das Produkt wird abgesaugt, getrocknet und mit verdünnter Na-Bicarbonat-Lösung gewaschen, erneut getrocknet und in 500 ml Aceton gelöst. Die Lösung wird heiß vom Ungelösten abfiltriert und das Produkt aus Wasser gefällt, abgesaugt und getrocknet.
Ausbeute: 182 g
Schmp.: 245-247 °C

2. Stufe: 4-(4-Methylbenzoyloxy)-benzoesäure-4-(4-methyl-benzoyloxy)-phenylester

345,3 g 4-Hydroxyphenyl-4-hydroxybenzoat werden mit 249 g Pyridin in 3000 ml Methylenchlorid suspendiert und bei 0 °C innerhalb von 3 h mit 460 g 4-Methylbenzoesäurechlorid versetzt. Das Reaktionsgemisch wird bei Raumtemperatur 14 h nachgerührt. Das Lösungsmittel wird i.Vak. abdestilliert und der Rückstand mit 1,4 l 5 %iger Salz säure aufgerührt. Das unlösliche Produkt wurde abgesaugt, mit Wasser neutral gewaschen und getrocknet.
Ausbeute: 643 g (85 % d.Th.)

Im Bereich von 190-350 °C kann unter dem Polarisationsmikroskop eine flüssigkristalline Phase festgestellt werden.

Beispiel 2

In einem Rundkolben wurde 50 g PPS-Granulat mit einer Schmelzviskosität von 37-38 Pas bei 320 °C und einem Schergefälle von 100 $s^{-1}$ unter $N_2$ mit 1,5 g 4-(4-Methylbenzoyloxy)-benzoesäure-4-(4-methylbenzoyloxy)-phenylester (LC-Ester Nr. 6) (entspricht einem Additivgehalt der Mischung von ca. 3 Gew.-%) vermengt, auf 320 °C erhitzt und unter Rühren homogenisiert. Insgesamt wurde nach dem Aufschmelzen des Polymeren 30 Minuten lang gerührt. Anschließend wurden die Heizbäder weggenommen, die Mischungen auf Raumtemperatur abgekühlt und die Proben gehäckselt.

Die Ergebnisse der DSC-Untersuchungen sowie der Schmelzviskositätsbestimmung sind in der Tabelle angegeben.

Beispiel 3

In der in Beispiel 1 beschriebenen Weise wurde eine Mischung aus 50 g PPS und 5,5 g (= 10 Gew.-%) desselben flüssigkristallinen Additivs hergestellt.

Die Ergebnisse der DSC-Untersuchung sowie der Schmelzviskositätsbestimmung sind in der Tabelle angegeben.

Tabelle 1

| Beispiel | Additiv-Menge (Gew.-%) | SV*) (PAS) | $\Delta H_K$ (J/g) |
|---|---|---|---|
| 2 | 3 | 28 | 44,1 |
| 3 | 10 | 17 | 45,5 |
| PPS | - | 37 - 38 | 44,4 |

*) Schmelzviskosität bei 320° C und 100 $s^{-1}$

Beispiele 4 und 5

In der in Beispiel 2 beschriebenen Weise wurde PPS mit 5 und 10 Gew.-% 4-Benzoyloxybenzoesäure-4-(4-benzoyloxy)-phenylester (LC-Ester Nr. 5) modifiziert. Die Schmelzviskositätswerte sind in Tabelle 2 verzeichnet.

Tabelle 2

| Beispiel | % Additiv (Gew.-%) | SV (PAS) (320° C, 100 $s^{-1}$) |
|---|---|---|
| 4 | 5 | 13 |
| 5 | 10 | 10 |
| PPS | - | 34 |

Beispiel 6 und Vergleichsbeispiel 1

Diese Beispiele demonstrieren den vorteilhaften Effekt der erfindungsgemäß einzusetzenden Additive bei der Herstellung von Polyarylensulfid-Fasern.

Ein Polyphenylensulfid mit einer Schmelzviskosität von 140 Pas (320° C/$10^3$ $sec^{-1}$) wurde in einer Extruderspinnapparatur aufgeschmolzen und mehrfädig versponnen. Das so erhaltene Spinngut wurde einem 2-stufigen Nachbehandlungsprozeß unterworfen (Vergleichsbeispiel 1).

In derselben Weise wurde ein erfindungsgemäß modifiziertes PPS, welches aus demselben Granulat durch Compoundierung mit 5 % 4-Benzoyloxybenzoesäure-4-(4-benzoyloxy)-phenylester (LC-Ester Nr. 5) hergestellt worden war, versponnen.

Die Spinn- und Nachbehandlungsbedingungen sowie die mechanischen und thermischen Eigenschaften der resultierenden Filamentgarne sind in Tabelle 3 zusammengestellt.

Tabelle 3

| Spinnbedingungen | Bsp. 6 | Vgl. Bsp. 1 |
|---|---|---|
| Schmelzetemp. (°C) | | |
| Extruderausgang | 331 | 330 |
| Düsenblock | 314 | 315 |
| Druckaufbau (bar) | | |
| Extruder | 40 | 40 |
| Spinnpumpe | 63 | 80 |
| Düse (Lochzahl/Durchm.xKanallänge) | 30/0,2x0,4 | 30/0,2x0,4 |
| Siebfilter (Maschenweite) (nm) | 32 | 32 |
| Abzug (m/mn) | 250 | 250 |
| Spinnverzug | 17,7 | 18,3 |
| Nachbehandlungsbedingungen | | |
| Stufe 1: (Vorverstreckung) | | |
| Strecktemp. (°C) | 88 | 88 |
| Streckgrad | 1:3,64 | 1:3,64 |
| Stufe 2: (Nachverstr. + Fixierung) | | |
| Strecktemp. (°C) | 160 | 160 |
| Streckgrad | 1:1,3 | 1:1,3 |
| Gesamtstreckgrad | 1:4,73 | 1:4,73 |
| Fixiertemp. (°C) (Heizgalette) | 190 | 203 |
| Faserdaten (Filamentgarne) | | |
| Titer (60-fädig) (dtex) | 235 | 237 |
| Festigkeit (HZK) (cN/dtex) | 4,52 | 3,9 |
| Dehnung (HZKD) (%) | 16,3 | 15,1 |
| E-Modul (cN/dtex) | 57,0 | 47,6 |
| TMA Bruch (°C) | 277 | 277 |
| Kochschrumpf (%) | 0,15 | 0,3 |

Wie die Daten in Tabelle 3 zeigen, weisen die Fasern aus dem erfindungsgemäßen PPS-Compound wesentlich bessere Eigenschaften auf als die des Vergleichs.

Weiterhin ließ sich das in Beispiel 6 benutzte Compound gegenüber dem Vergleich störungsfreier und schneller nachbehandeln. Demgegenüber traten bei der Nachbehandlung der Vergleichsprobe gehäuft Kapillarrisse auf. Die Flusenbildung war merklich verstärkt. Dies spiegelt sich in den schlechteren mechanischen Eigenschaften der Filamentgarne des Vergleichsbeispiels wider (Festigkeiten, E-Modul!).

Die gleichmäßigere und glattere Oberflächenstruktur von Fäden aus dem erfindungsgemäßen PPS-Compound ist auf rasterelektronenmikroskopischen (REM)-Aufnahmen gut zu erkennen (Abb. 1, 2 und 3) im Vergleich zu Fasern ohne Zusatz (Abb. 4, 5 und 6).

Beispiel 7 (nicht erfindungsgemäß)

Herstellung eines niedermolekularen, flüssigkristallinen Esters nach Formel (II) mit 10 aromatischen Teilstrukturen durch Schmelzveresterung nach P 3 831 121.6.

In einen 25 l-Autoklaven wurden 3,31 kg p-Hydroxybenzoesäure, 2,64 kg Hydrochinon, 1,95 kg Benzoesäure, 2,66 kg Isophthalsäure, 7,49 kg Acetanhydrid und 0,91 g Magnesiumpulver eingewogen. Unter einem $N_2$-Strom von 40 l $h^{-1}$ wurde auf 150°C aufgeheizt. Nach Erreichen dieser Temperatur wurde eine halbe Stunde lang gehalten, wobei kräftig gerührt wurde.

Anschließend wurde bei nachlassender Destillationsgeschwindigkeit unter Rühren schrittweise auf 270°C aufge heizt, wobei zuletzt ein Vakuum von 30 mbar angelegt wurde. Das Produkt wurde aus dem

Kessel abgelassen und zerkleinert.
Ausbeute: 8,87 kg (96 %)

Die statistisch aufgebaute Substanz vom Typ II zeigt unter dem Polarisationsmikroskop im Bereich von 190 bis 350 °C eine flüssigkristalline Phase.

<u>Beispiel 8 und Vergleichsbeispiel 2</u>

Auf einem ZSK 32-Doppelwellenextruder der Firma Werner und Pfleiderer wurden PPS-Compounds, die mit Glasfasern und einem mineralischen Füllstoff verstärkt waren, und 5 % des nach Beispiel 7 hergestellten niedermolekularen, flüssigkristallinen Esters nach Formel (II) mit 10 aromatischen Teilstrukturen bzw. keinen LC-Ester enthielten, bei 323-325 °C hergestellt.

Die Ergebnisse mechanischer Prüfungen sowie der Schmelzviskositätsmessungen sind in Tabelle 4 zusammengefaßt.

Tabelle 4

| | Bsp. 8 | Vgl. Bsp. 2 |
|---|---|---|
| LC-Ester (s. Bsp. 7) (%) | 5 | - |
| Aschegehalt (%) | 54,2 | 56,7 |
| $E_Z$ (MPa) | 11074 | 11265 |
| Zugfestigkeit (MPa) | 53,5 | 53,8 |
| Schmelzviskosität[1)] 1000 $s^{-1}$ | 101 | 165 |
| (320 °C) 1500 $s^{-1}$ | 94 | 161 |

[1)] Hochdruckkapillarviskosimeter, L/D = 30

Das Beispiel zeigt, daß bei Erhalt der sehr guten mechanischen Eigenschaften die erfindungsgemäße Formmasse eine viel geringere Schmelzviskosität aufweist.

**Ansprüche**

1. Neue, leichtfließende Polyarylensulfid-Formassen, dadurch gekennzeichnet, daß sie bestehen aus
A) 70-99,9 Gew.-% Polyarylensulfiden, bevorzugt Polyparaphenylensulfid,
B) 0,1-30 Gew.-% eines oder mehrerer niedermolekularer, flüssigkristalliner Ester und/oder Esteramide des allgemeinen Strukturtyps (I),

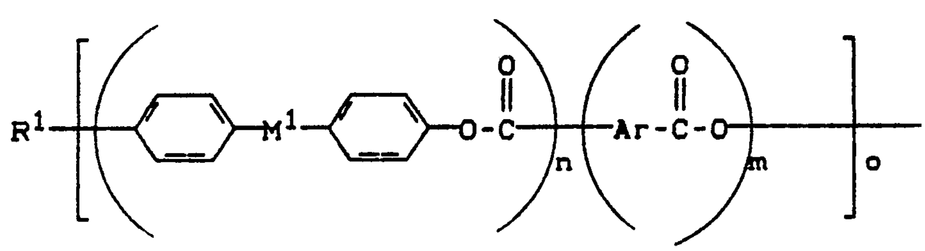

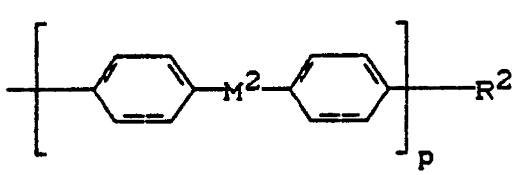

(Formel I)

worin
-Ar ein aromatischer Rest mit 6 - 20 C-Atomen ist, der einkernig oder mehrkernig sein kann, wobei der mehrkernige Rest über eine Bindung verknüpft oder annelliert sein kann,

worin
$R^1$ und $R^2$ unabhängig voneinander H, Chlor, -O-$C_1$-$C_4$-Alkyl, -O-$C_3$-$C_6$-Cycloalkyl, -O-$C_6$-$C_{14}$-Aryl, $C_1$-$C_4$-Alkyl, $C_3$-$C_6$-Cycloalkyl, $C_6$-$C_{14}$-Aryl, fluoriertes $C_1$-$C_4$-Alkyl, fluoriertes $C_3$-$C_6$-Cycloalkyl, fluoriertes $C_6$-$C_{14}$-Aryl (d.h., daß in dem fluorierten Alkyl, Cyclalkyl bzw. Aryl mindestens ein und maximal alle Wasserstoffatome gegen Fluoratome ausgetauscht sind im Vergleich zu den entsprechenden nichtfluorierten Alkyl, Cycloalkyl bzw. Aryl), oder ein Rest der Formeln (1)/a) bis l) sind,

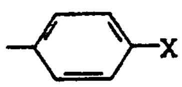 , 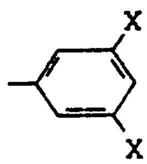 , 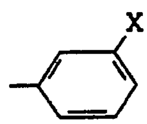 , 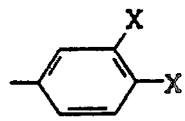 ,

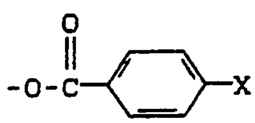 , 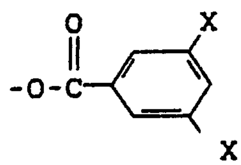 , 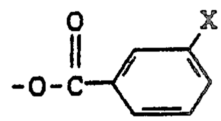 ,

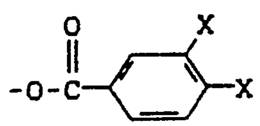 , 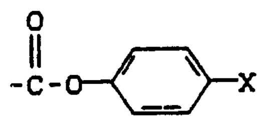 ,

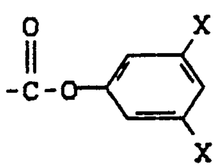 , 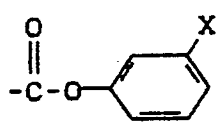 , 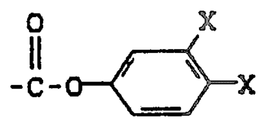

(Reste - (1.a) - (1.l), entsprechend ihrer Aufeinanderfolge),
wobei
X wiederum die vorstehend für $R^1$ bzw. $R^2$ genannten Reste von H bis fluoriertes $C_6$-$C_{14}$-Aryl ist,
worin $-M^1$ und $-M^2$ gleich oder verschieden sind und zweibindige Reste der Formeln I.1) bis I.11)

$-\underset{\underset{O}{\|}}{C}-O-$,

$-\underset{\underset{O}{\|}}{C}-NH-$,

$-N=N-$, $-N=\underset{\underset{O}{\downarrow}}{N}-$,

$-CH=N-$, $-CH=CH-$, $-C\equiv C-$, $-O-\underset{\underset{O}{\|}}{C}-$,

$-HN-\underset{\underset{O}{\|}}{C}-$,

$-\underset{\underset{O}{\downarrow}}{N}=N-$

und $-NH=CH-$
(Formeln (I.1) - (I.11), entsprechend ihrer Aufeinanderfolge)
sein können,
und worin
m Null, 1 oder 2,
n 1 oder 2,
o 1, 2, 3 oder 4 und
p Null oder 1 sind, wobei im Falle von p = Null
$R^2$ nur (1a), (1b), (1c) oder (1d) sein kann,
und/oder

flüssigkristalliner Ester- und/oder Esteramid-Oligomerer des Strukturtyps der Formel (II) mit statistischer Verteilung der Struktureinheiten

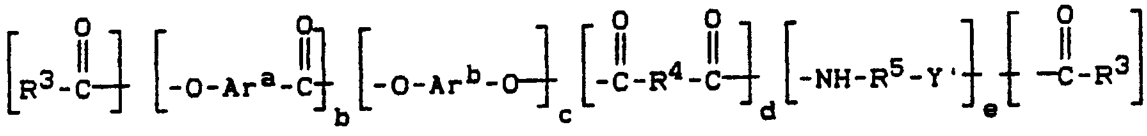

(II)

worin
$R^3$ einen Alkylrest, vorzugsweise Methylrest, oder einen gegebenenfalls substituierten, vorzugsweise mono- oder disubstituierten Arylrest, vorzugsweise einen Phenylrest, darstellt,
($R^3$- $\underset{\underset{O}{\|}}{C}$
ist jeweils eine Endgruppe)
$Ar^a$ ein bivalenter, gegebenenfalls substituierter (Substituenten wie in $R^3$), ein-oder mehrkerniger aromatischer Rest mit 6 - 24 C-Atomen ist, wobei der mehrkernige Rest direkt verknüpft oder auch annelliert sein kann,
$Ar^b$ ein bivalenter, gegebenenfalls substituierter, ein- oder mehrkerniger aromatischer Rest mit 6 - 30 C-Atomen, wobei der mehrkernige Rest unterschiedlich verknüpft sein kann, ist,
$R^4$ bzw. $R^5$ für $C_mH_{2m}$ mit m = 0 bis 40 ($R_4$) bzw. 3 - 40 ($R_5$) stehen oder die Bedeutung eines gegebenenfalls substituierten bivalenten, ein- oder mehrkernigen aromatischen Restes haben, wobei der mehrkernige Rest unterschiedlich über eine Bindung oder auch annelliert verknüpft sein kann,
$Y'$ für -O-,
- $\overset{\overset{O}{\|}}{C}$ - oder -NH- steht, und im Falle der Verknüpfung mit einer Endgruppe
- $\overset{\overset{O}{\|}}{C}$ -$R^3$ für die Reste -O- oder -NH- steht, und
b = Null bis 10, vorzugsweise bis 8, insbesondere bis 4,
c = 1 bis 9, vorzugsweise bis 7, insbesondere 1 bis 4,
d = Null bis 9, vorzugsweise bis 7, insbesondere bis 3, und
e = Null bis 3, vorzugsweise bis 2, ist
und worin die Endgruppen durch Strukturelemente des Typs
$R^3$- $\overset{\overset{O}{\|}}{C}$ - gebildet werden,
sowie
C) gegebenenfalls 0,001 bis ungefähr 300 Gew.-%, bezogen auf die Summe der Gewichte der Komponenten A) und B), weiterer Zusatzstoffe.

2. Leichtfließende Polyarylensulfid-Formmassen nach Anspruch 1, dadurch gekennzeichnet, daß die Additive der Formeln (I) und/oder (II) bevorzugt zu 1-20 und besonders bevorzugt zu 2-15 Gew.-% eingesetzt werden.

3. Leichtfließende Polyarylensulfid-Formmassen, dadurch gekennzeichnet, daß als Additive der Formel (I) bevorzugt eingesetzt werden:
(I,A) Flüssigkristalline Verbindungen der Formel (I) mit drei aromatischen Teilstrukturen,
worin
m = Null, n = 1, o = 1 und p = Null sind,

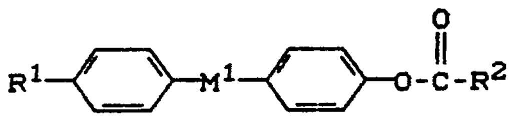 (Formel IA)

| Nr. | $R^1$ | $M^1$ | $R^2$ |
|---|---|---|---|
| 1 | $CH_3$ | 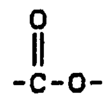 | 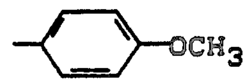 |
| 2 | $CH_3O-$ | 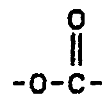 | 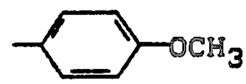 |

| Nr. | $R^1$ | $M^1$ | $R^2$ |
|---|---|---|---|
| 3 | $CH_3O-$ | 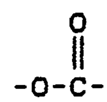 | 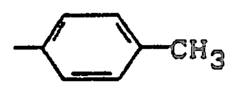 |
| 4 | $CH_3$ | 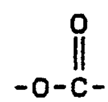 | 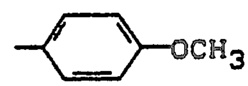 |

<u>(I,B)</u> Flüssigkristalline Verbindungen der Formel (I) mit <u>vier</u> aromatischen Teilstrukturen, worin wieder $m$ = Null, n = 1, o = 1 und p = Null sind:

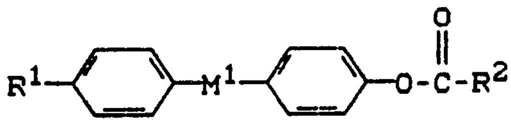

(Formel IB)

| Nr. | $R^1$ | $M^1$ | $R^2$ |
|---|---|---|---|
| | 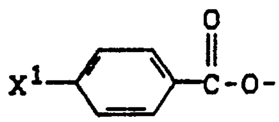 | 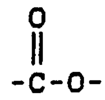 | 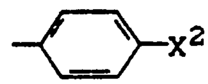 |
| 5 | $X^1=H$ | | $X^2=H$ |
| 6 | $CH_3$ | | $CH_3$ |
| 7 | $OCH_3$ | | $OCH_3$ |
| 8 | $CF_3$ | | $CF_3$ |
| 9 | Cl | | Cl |

(I,C) Flüssigkristalline Verbindungen der Formel (I) mit fünf aromatischen Teilstrukturen, worin m = n = o = p = 1 sind,

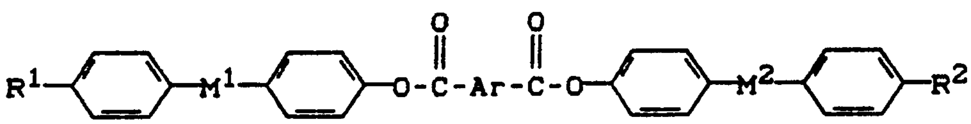

(Formel IC)

| Nr. | $R^1$ | $M^1$ | $M^2$ | $R^2$ | Ar |
|---|---|---|---|---|---|
| 10 | H | 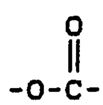 | 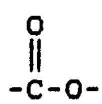 | H | 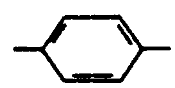 |
| 11 | $CH_3$ | " | " | $CH_3$ | " |
| 12 | $OCH_3$ | " | " | $OCH_3$ | " |
| 13 | H | 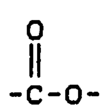 | 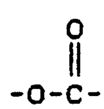 | H | " |
| 14 | $CH_3$ | " | " | $CH_3$ | " |
| 15 | $OCH_3$ | " | " | $OCH_3$ | " |

(I,D) Flüssigkristalline Verbindungen der Formel (I) mit sieben aromatischen Teilstrukturen, worin wieder m = n = o = p = 1 sind:

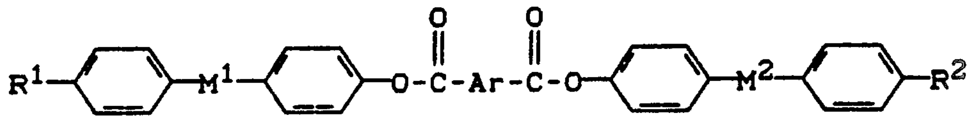

(Formel I D)

| Nr. | $R^1$ | $M^1$ | Ar | $M^2$ | $R^2$ |
|---|---|---|---|---|---|
| 16 | 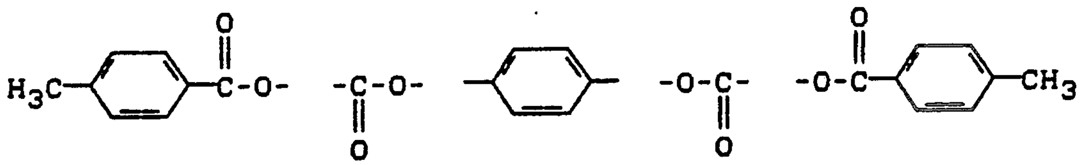 | | | | |
| 17 | 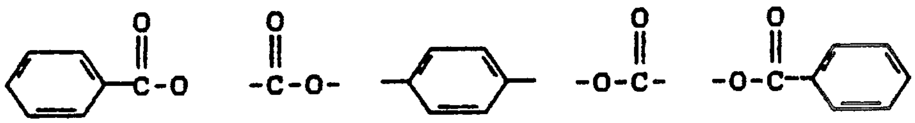 | | | | |
| 18 | 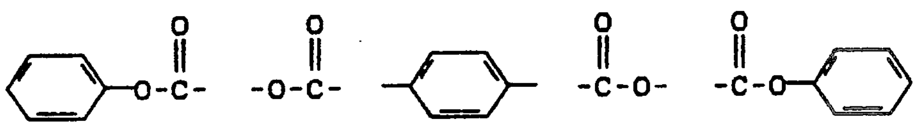 | | | | |
| 19 | 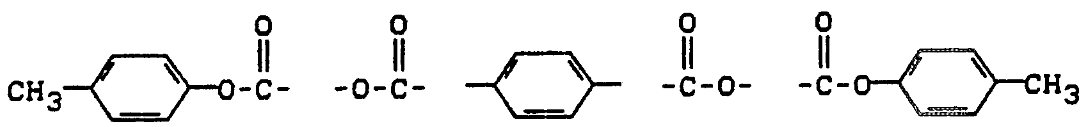 | | | | |

und daß als Additive nach Formel (II) bevorzugt solche mit durchschnittlich 3-25, besonders bevorzugt 4-20 aromatischen Teilstrukturen eingesetzt werden, wobei eine Teilstruktur wie im Text definiert ist, wobei die Additive der Formel (II) mittlere Molekulargewichte (Zahlenmittel) bis 4000 g $mol^{-1}$, vorzugsweise bis 2500 g $mol^{-1}$, aufweisen.

4. Leichtfließende Polyarylensulfid-Formmassen nach Anspruch 1, dadurch gekennzeichnet, daß als Bausteine für die flüssigkristallinen Verbindungen der Formel (II) bevorzugt 4-Hydroxy-3-methylbenzoesäure 4-Hydroxy-3-methoxybenzoesäure, 4-Hydroxybenzoesäure, 3-Hydroxybenzoesäure, 6-Hydroxy-2-naphthoesäure, Hydrochinon, 4,4′-Dihydroxydiphenyl, 4,4′-Dihydroxydiphenylether, 4,4′-Dihydroxydiphenylethan, 4 ,4′-Dihydroxydiphenoxyethan, 3,5′-Dihydroxydiphenyl, 3,5′-Dihydroxydiphenylether, 1,5-Dihydroxynaphthalin, 2,6-Dihydroxynaphthalin, 1,4-Dihydroxynaphthalin, Methylhydrochinon, Phenylhydrochinon, 2,2′-Dimethyl-4,4′-dihydroxydiphenyl, 3,3′,5,5′-Tetramethyl-4,4′-dihydroxydiphenyl, 1,2-(2-Chlor-4-hydroxyphenoxy)-ethan, 4-Methoxy-2,6-dihydroxynaphthalin, Resorcin, 3,4′-Dihydroxydiphenyl, 1,6-Dihydroxynaphthalin, 1,7-Dihydroxynaphthalin, 2,7-Dihydroxynaphthalin, 4-Chlorresorcin, 4-Phenylresorcin, 4-Ethoxyresorcin, 2,5-Dichlor-1,6-dihydroxynaphthalin, 4-Methoxy-2,7-dihydroxynaphthalin, 1,4-Naphthalindicarbonsäure, 1,5-Naphthalindicarbonsäure, 2,6-Naphthalindicarbonsäure, Biphenyl-4,4′-dicarbonsäure, Bipenyl-3,3′-dicarbonsäure, Diphenoxyethan-4,4′-dicarbonsäure, Diphenylether-4,4′-dicarbonsäure, Methylterephthalsäure, Methoxyterephthalsäure, Chlorterephthalsäure, 4-Chlornaphthalin-2,7-dicarbonsäure, 2,6- oder 2,7-Naphthalindicarbonsäure, Biphenyl-3,4′-dicarbonsäure, 4-Methylisophthalsäure, 5-Methylisophthalsäure, Diphenylether-4,4′-dichlor-3,3′-dicarbonsäure, Iso-und Terephthalsäure, ε-Aminocapronsäure bzw. Caprolactam, ω-Aminoundecansäure, ω-Aminododecansäure bzw. Laurinlactam und 4-Aminocyclohexyl-carbonsäure, 4-Aminobenzoesäure, 6-Amino-2-naphthoesäure, 3-Aminophenol, 4-Aminophenol, 3-Amino-2-methylphenol, 3-Amino-4-methylphenol, 5-Amino-1-naphthol, 6-Amino-1-naphthol, 5-Amino-2-naphthol, 7-Amino-2-naphthol, 8-Amino-2-naphthol, 6-Amino-2-naphthol, 4′-Amino-1-hydroxybiphenyl, Oxalsäure, Bernsteinsäure, Adipinsäure, Korksäure, Azelainsäure, Trimethyladipinsäure, Sebacinsäure, Dodecandisäure und Dimerfettsäuren, Benzoesäure, 4-Methylbenzoesäure, 4-Methoxybenzoesäure und 4-Biphenylcarbonsäure verwendet werden.

5. Leichtfließende Polyarylensulfid-Formmassen nach Anspruch 1, dadurch gekennzeichnet, daß als Bausteine für die flüssigkristallinen Verbindungen der Formel (II) besonders bevorzugt Hydrochinon, 4,4′-Dihydroxydiphenyl, 4-Aminophenol, 3-Aminophenol, 4′-Amino-1-hydroxybiphenyl, 4-Hydroxybenzoesäure, 3-Hydroxybenzoesäure, 6-Hydroxy-2-naphthoesäure, Oxalsäure, Adipinsäure, Sebazinsäure, Dimerfettsäuren, Isophthalsäure, Terephthalsäure, 1,4-Naphthalindicarbonsäure, 1,5-Naphthalindicarbonsäure, 2,6-Naphthalindicarbonsäure, 4,4′-Biphenyldicarbon säure, Aminocapronsäure bzw. Caprolactam, 4-Aminobenzoesäure, 6-Amino-2-naphthoesäure, Benzoesäure, 4-Methylbenzoesäure und 4-Biphenylcarbonsäure verwendet werden.

6. Leichtfließende Polyarylensulfid-Formmassen nach Anspruch 1, dadurch gekennzeichnet, daß als Zusatzstoffe gemäß C) beispielsweise Verstärkungsmaterialien, Weichmacher, Antioxidantien, Pigmente, Bewitterungsstabilisatoren (bzw. Kombinationen), Nukleierungsmittel, polymere Legierungspartner (z.B. Schlagzähmodifikatoren) und Flammschutzmittel in einer Menge von 0,001 bis ungefähr 300 Gew.-% anwesend sein können.

7. Formkörper, Folien, Verbundwerkstoffe und andere Gegenstände aus Polyarylensulfid-Formmassen nach Anspruch 1.

8. Fasern, Monofile, Filamente und flächtige Gewebe aus Polyarylensulfid-Formmassen nach Anspruch 1.

9. Verwendung von niedermolekularen, flüssigkristallinen Estern und/oder Esteramiden der allgemeinen Formel (I) und/oder flüssigkristallinen Estern und/oder Esteramiden der Formel (II) als LC-Fließverbesserer in Mengen von 0,1 bis 30 Gew.-%, bezogen auf die Summe der Gewichte von Polyarylensulfid und Additiv (I) und/oder (II), zur Herstellung leichtfließender Polyarylensulfid-Formmassen.

10. Verwendung der Formmassen nach Anspruch 1 zur Herstellung von Formkörpern, Folien, Fasern, Monofilen, Filamenten, Verbundwerkstoffen und anderen Gegenständen.

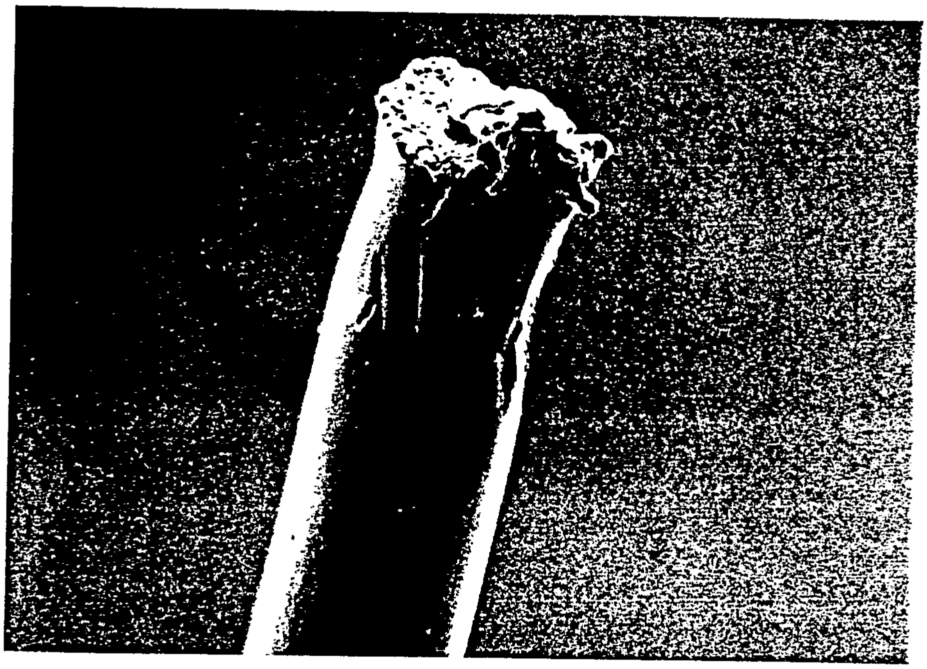

mit Zusatz

Faserabschnitt

FIG.1

7,3 µm

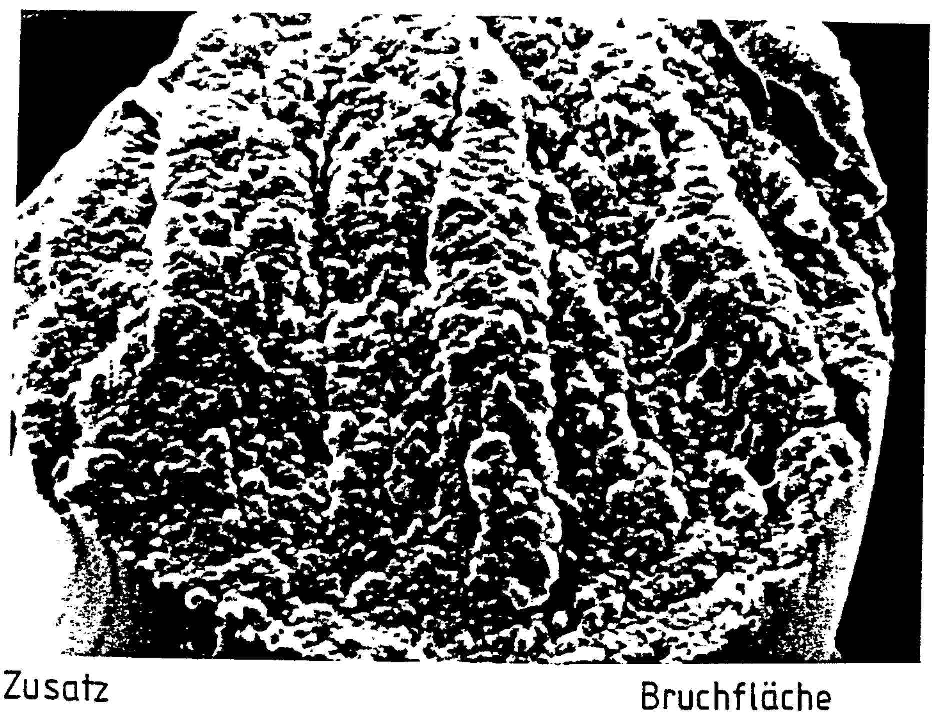

mit Zusatz

Bruchfläche

FIG. 2

1,8 µm

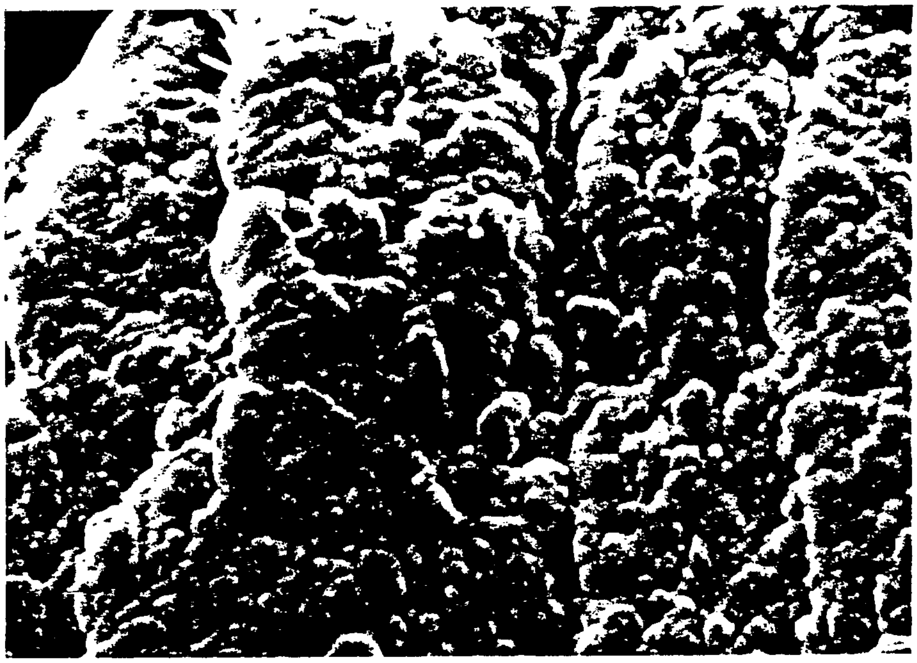

mit Zusatz

Bruchfläche

FIG. 3

0,9 µm

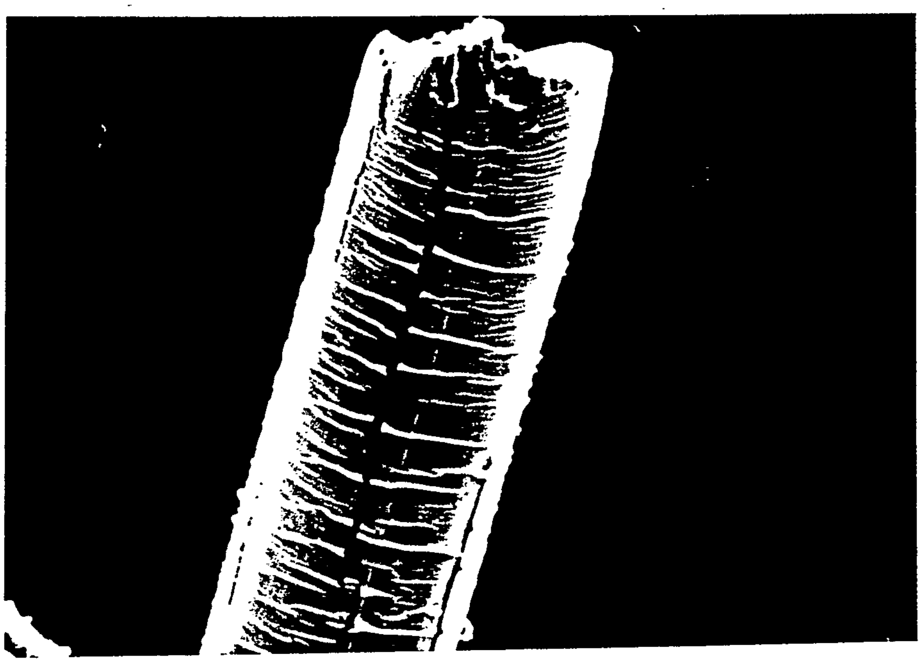

ohne Zusatz

Faserabschnitt

FIG. 4

7,3 µm

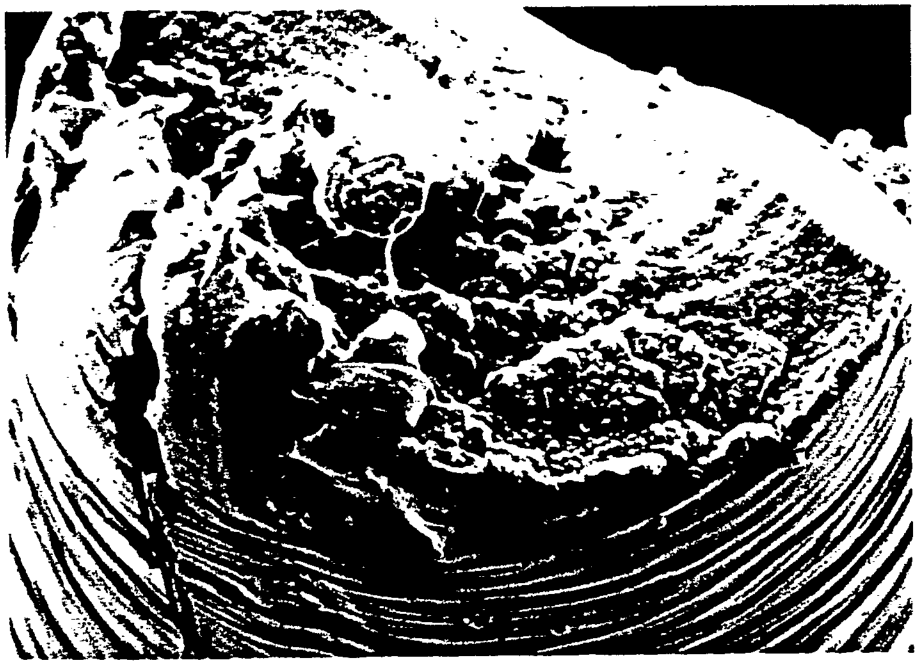

ohneZusatz

FIG.5

Bruchfläche

1,8µm

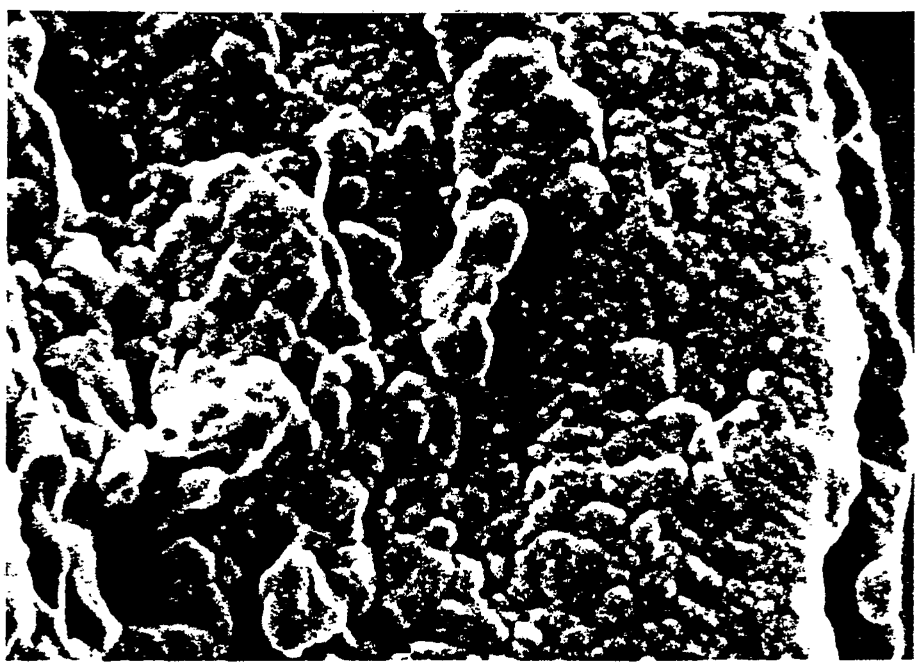

ohneZusatz

Brüchfläche

0,9µm

FIG.6